# EUROPÄISCHE PATENTANMELDUNG

(11) **EP 3 457 560 A1**
(43) Veröffentlichungstag der Anmeldung: **20.03.2019**
(21) Anmeldenummer: 17191106.8
(22) Anmeldetag: 14.09.2017
(51) Int. Cl.: H02P 25/064, B60L 13/00, B60L 13/03, B65G 54/02, H02P 25/062, E01B 25/12, E01B 25/34, H02K 41/03

(54) **LANGSTATORLINEARMOTOR**

(71) Anmelder: B&R Industrial Automation GmbH, 5142 Eggelsberg (AT)
(72) Erfinder: Holzleitner, Alois, 5280 Braunau am Inn (AT); Höck, Martin, 5121 Ostermiething (AT); Brucker, Michael, 4890 Weißenkirchen i.A. (AT)
(74) Vertreter: Patentanwälte Pinter & Weiss OG

(57) **Zusammenfassung**

Für einen Langstatorlinearmotor mit einer Weiche und einer sicheren Führung der Transportfahrzeuge in Bewegungsrichtung entlang der Transportstrecke ist vorgesehen, dass das Transportfahrzeug (Tn) außerhalb der Weiche (W) zumindest abschnittsweise in Bewegungsrichtung (x) zwangsgeführt ist und dabei an der Transportstrecke (2) zumindest ein einseitiger Streckenabschnitt (2d) vorgesehen ist, entlang dem ein Fahrzeug-Führungselement (7) nur an einer Seite der Transportstrecke (2) mit dem Strecken-Führungselement (6) an der zugeordneten Seite der Transportstrecke (2) zur Zwangsführung in Bewegungsrichtung (x) zusammenwirkt, und die Zwangsführung in Bewegungsrichtung (x) im Bereich der Weiche (W) in Querrichtung (y) aufgehoben ist.

## Beschreibung

Die gegenständliche Erfindung betrifft einen Langstatorlinearmotor mit einer Transportstrecke entlang der zumindest ein Transportfahrzeug in Bewegungsrichtung bewegbar angeordnet ist, wobei am Transportfahrzeug in einer Querrichtung quer zur Bewegungsrichtung zu beiden Seiten jeweils ein Fahrzeug-Führungselement vorgesehen ist und zumindest ein Fahrzeug-Führungselement mit einem Strecken-Führungselement an der Transportstrecke zusammenwirkt, um das Transportfahrzeug entlang der Transportstrecke zu führen, und an der Transportstrecke zumindest eine Weiche vorgesehen ist, die einen ersten Streckenabschnitt der Transportstrecke mit einem zweiten Streckenabschnitt der Transportstrecke verbindet und das Transportfahrzeug im Bereich der Weiche in Querrichtung vom ersten Streckenabschnitt auf den zweiten Streckenabschnitt, oder umgekehrt, wechselbar ist.

Langstatorlinearmotoren werden in hinlänglich bekannter Art und Weise für Fördereinrichtungen für verschiedenste Anwendungen verwendet. Ein Langstatorlinearmotor besteht im Wesentlichen aus nebeneinander angeordneten Antriebsspulen, die den Langstator des Langstatorlinearmotors ausbilden. Entlang des Langstators können eine Anzahl von Transportfahrzeugen bewegt werden. Der Langstator bildet damit auch eine, oder einen Teil einer, Transportstrecke aus, entlang der die Transportfahrzeuge bewegt werden können. Die Antriebsspulen können durch Anlegen einer Spulenspannung zur Erzeugung eines Magnetfeldes einzeln oder in Gruppen bestromt werden. Durch Regelung der Bestromung der Antriebsspulen kann ein entlang der Transportstrecke bewegtes Magnetfeld erzeugt werden. An einem Transportfahrzeug ist zumindest ein Antriebsmagnet, als Permanentmagnet oder Elektromagnet ausgeführt, angeordnet, der mit dem durch die Antriebsspulen erzeugten Magnetfeld zur Bewegung des Transportfahrzeuges zusammenwirkt. Damit können mehrere Transportfahrzeuge unabhängig voneinander entlang der Transportstrecke und mit unterschiedlichen Bewegungsprofilen (Position, Geschwindigkeit, Beschleunigung) bewegt werden. Der grundsätzliche Aufbau und die grundsätzliche Funktionsweise eines Langstatorlinearmotors sind hinlänglich bekannt, weshalb hier nicht näher darauf eingegangen wird. Ein Beispiel für einen solchen Langstatorlinearmotor kann beispielsweise der EP 3 109 998 A1 entnommen werden.

Das Transportfahrzeug eines Langstatorlinearmotors muss natürlich auf geeignete Weise entlang der Transportstrecke geführt und an dieser gehalten werden. Dazu sind an der Transportstrecke Strecken-Führungselemente vorgesehen, die mit Fahrzeug-Führungselementen am Transportfahrzeug zur Führung entlang der Transportstrecke zusammenwirken. Hierbei können an sich beliebige Führungselemente, wie beispielsweise Rollen, Räder, Gleitelemente, Führungsflächen, usw., zum Einsatz kommen.

Die US 9,428,347 B2 beschreibt beispielsweise einen Langstatorlinearmotor mit einem Transportfahrzeug mit Führungsrädern an einer Seite, die auf zugeordneten Führungsflächen an der Transportstrecke abrollen. Um das Transportfahrzeug an der Transportstrecke zu halten, wird die Magnetkraft der Antriebsmagnete am Transportfahrzeug genutzt. Ohne diese Magnetkraft würde das Transportfahrzeug von der Transportstrecke fallen. Damit soll es ermöglicht werden, Transportfahrzeuge auf einfache Weise ohne Demontage gewisser Führungselemente von der Transportstrecke abzunehmen oder auf diese aufzusetzen. Dieses Führungskonzept ist damit keine mechanische Zwangsführung in Bewegungsrichtung, da das Fahrzeug quer zur Bewegungsrichtung bewegt werden kann. Ein wesentlicher Nachteil dieses einseitigen Führungskonzepts ist, dass die Geschwindigkeit des Transportfahrzeuges in gekrümmten Abschnitten der Transportstrecke aufgrund der wirkenden Zentrifugalkraft beschränkt ist. Die Zentrifugalkraft hebt die wirkende Magnet-Haltekraft zum Teil, oder sogar zur Gänze, auf, womit das Halten des Transportfahrzeuges an der Transportstrecke unter Umständen (auch abhängig von der Masse des Transportfahrzeuges samt Beladung) nicht mehr gewährleistet ist, was zum Herunterfallen des Transportfahrzeuges führen kann. Auch bei einer unsymmetrischen Beladung des Transportfahrzeuges kann es passieren, dass die Magnet-Haltekraft nicht ausreicht, um das Transportfahrzeug an der Transportstrecke zu halten. Ein Herunterfallen eines Transportfahrzeuges ist im Betrieb des Langstatorlinearmotors natürlich auf jeden Fall zu verhindern. Abgesehen davon ist mit einer derartigen einseitigen Führung eine Weiche in der Transportstrecke nicht, oder nur sehr schwer, zu realisieren, weil die Führung und das Halten des Transportfahrzeuges im Weichenbereich schwierig ist.

Die WO 2012/101004 A1 beschreibt einen Langstatorlinearmotor mit einem Transportfahrzeug, das in Bewegungsrichtung entlang der Transportstrecke mechanisch zwangsgeführt ist, d.h., dass das Transportfahrzeuge nur in diese eine Bewegungsrichtung bewegt werden kann. Damit sind die Führung und das Halten des Transportfahrzeuges immer gewährleistet. Mit einer derartigen mechanischen Zwangsführung ist die Realisierung einer Weiche jedoch schwierig und nur mechanisch zu lösen, beispielsweise durch bewegliche Streckenabschnitte wie in der WO 2014/047104 A1, was jedoch aufwendig ist.

In der WO 2015/042409 A1 wird die sichere Führung des Transportfahrzeuges entlang der Transportstrecke dadurch sichergestellt, dass immer eine zweiseitige Führung vorhanden ist. Dazu sind am Transportfahrzeug an beiden Seiten (in Bewegungsrichtung gesehen) Fahrzeug-Führungselemente vorgesehen und an der Transportstrecke ebenfalls zu beiden Seiten des Transportfahrzeuges damit zusammenwirkende Strecken-Führungselemente. Damit ist das Transportfahrzeuge in Bewegungsrichtung immer sicher geführt und ein Herunterfallen von der Transportstrecke praktisch unmöglich. Damit kann auch eine Weiche realisiert werden, weil die Ausführung der Führung eine Bewegung des Transportfahrzeuges quer zur Bewegungsrichtung zulässt. Allerdings ist der derartige Aufbau natürlich aufwendig, weil immer zu beiden Seiten Führungen vorzusehen sind, was den Langstatorlinearmotor auch teuer macht. Abgesehen davon ist eine doppelte Führung auch aufgrund von Fertigungstoleranzen auch immer schwieriger zu realisieren, da sicher verhindert werden muss, dass das Transportfahrzeug durch die doppelte Führung blockiert oder in der Bewegung behindert wird.

Es ist daher eine Aufgabe der gegenständlichen Erfindung, einen Langstatorlinearmotor anzugeben, bei dem der Aufwand für eine sichere Führung der Transportfahrzeuge in Bewegungsrichtung entlang der Transportstrecke reduziert werden kann und bei dem trotzdem auf einfache Weise eine Weiche realisiert werden kann.

Diese Aufgabe wird erfindungsgemäß dadurch gelöst, dass das Transportfahrzeug außerhalb der Weiche zumindest abschnittsweise in Bewegungsrichtung zwangsgeführt ist und dabei an der Transportstrecke zumindest ein einseitiger Streckenabschnitt vorgesehen ist, entlang dem ein Fahrzeug-Führungselement nur einer Seite der Transportstrecke mit dem Strecken-Führungselement an der zugeordneten Seite der Transportstrecke zur Zwangsführung in Bewegungsrichtung zusammenwirkt, und dass im Bereich der Weiche die Zwangsführung in Bewegungsrichtung in Querrichtung aufgehoben ist. Diese Ausführung ermöglicht es, die Transportstrecke konstruktiv einfacher aufzubauen, da nicht zwingend an beiden Seiten eine Führung für das Transportfahrzeug realisiert sein muss. Damit kann die Transportstrecke als konstruktiv einfacher einseitiger Streckenabschnitt realisiert werden, weil trotzdem die Zwangsführung in Bewegungsrichtung sichergestellt ist. Durch diese Zwangsführung wird das Transportfahrzeug immer sicher an der Transportstrecke gehalten. Um dabei trotzdem auf einfache Weise eine Weiche realisieren zu können ist vorgesehen, dass im Bereich der Weiche die Zwangsführung in Querrichtung, in der die Lenkbewegung des Transportfahrzeuges stattfindet, aufgehoben wird. Nachdem in einer Weiche die Transportstrecke immer zu beiden Seiten ausgeführt ist, ist dabei trotzdem sichergestellt, dass das Transportfahrzeug nicht von der Transportstrecke fallen kann.

Hierbei ist es besonders vorteilhaft, wenn der erste Streckenabschnitt in Bewegungsrichtung des Transportfahrzeuges vor und/oder nach der Weiche als einseitiger Streckenabschnitt ausgeführt ist, weil damit der konstruktive Aufwand für die Realisierung der Transportstrecke reduziert werden kann. Hierfür ist es weiters vorteilhaft, wenn der zweite Streckenabschnitt auch als einseitiger Streckenabschnitt ausgeführt ist.

Um die Führung in Querrichtung auf einfache Weise aufzuheben, kann vorgesehen sein, dass im Bereich der Weiche das Strecken-Führungselement zur Führung des Transportfahrzeugs in Querrichtung entfernt ist. Alternativ kann im Bereich der Weiche auch das Fahrzeug-Führungselement zur Führung des Transportfahrzeugs in Querrichtung verstellbar sein, um das Zusammenwirken des Fahrzeug-Führungselements zur Führung des Transportfahrzeugs in Querrichtung mit dem zugeordneten Strecken-Führungselement aufzuheben.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 eine Ausführung einer Transportstrecke eines Langstatorlinearmotors,
Fig.2 einen Querschnitt durch einen zweiseitigen Streckenabschnitt,
Fig.3 einen Querschnitt durch einen einseitigen Streckenabschnitt,
Fig.4 eine Ausführung des Strecken-Führungselements im Bereich einer Weiche,
Fig.5 einen Querschnitt im Bereich einer Weiche und
Fig.6 eine mögliche Ausführung eines Strecken- und Fahrzeug-Führungselements.

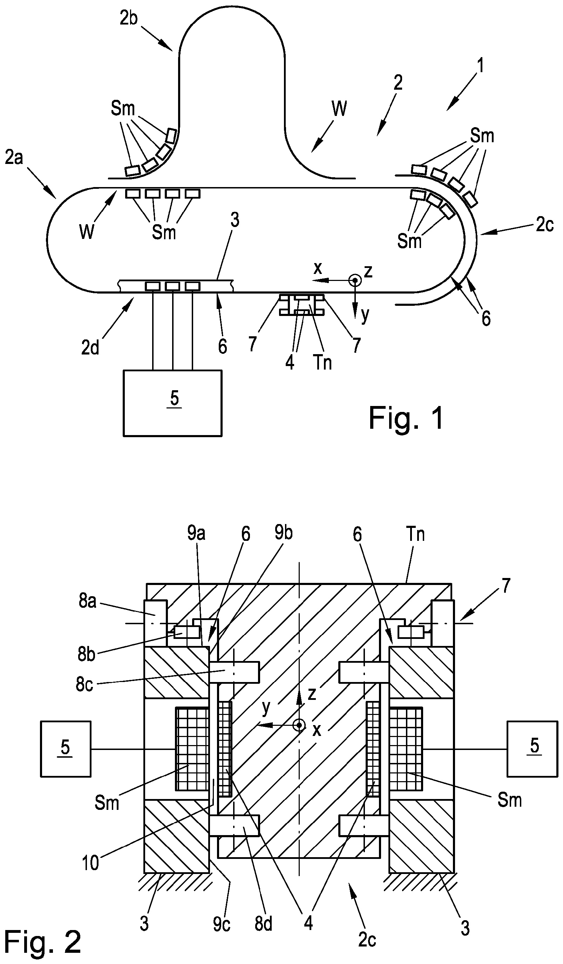

Die Fig.1 zeigt eine beispielhafte Förderanwendung mit einem Langstatorlinearmotor 1 mit einer Transportstrecke 2, entlang der eine Anzahl von Transportfahrzeugen Tn, mit n ≥ 1, bewegt werden können. Der Einfachheit halber ist in Fig.1 nur ein einziges Transportfahrzeug Tn dargestellt, wobei in einer solchen Anwendung in der Regel eine Vielzahl von Transportfahrzeugen Tn, häufig einige Hundert, gleichzeitig bewegt werden. Die Transportstrecke 2 wird gebildet durch in Bewegungsrichtung x nebeneinander angeordnete Antriebsspulen Sm (m steht für einen Index von 1 bis Anzahl der Antriebsspulen), die an einer ortsfesten Haltekonstruktion 3 (in Fig.1 nur angedeutet) angeordnet sind. Die Antriebsspulen Sm können von einer Anlagensteuereinheit 5 angesteuert werden (in Fig.1 nur für einige Antriebsspulen angedeutet), um diese zu bestromen um ein bewegtes Magnetfeld zu erzeugen. Am Transportfahrzeug Tn sind an beiden Seiten (in Querrichtung y gesehen) Antriebsmagnete 4 angeordnet, die in bekannter Weise mit dem von den Antriebsspulen Sm erzeugten Magnetfeld zur Bewegung des Transportfahrzeuges Tn zusammenwirken. Zur Bewegung eines Transportfahrzeuges Tn werden vorzugsweise nur die Antriebsspulen Sm im Bereich der Antriebsmagnete 4 eines Transportfahrzeuges Tn bestromt.

Das verwendete kartesische Koordinatensystem x, y, z ist ein mit dem Transportfahrzeug Tn mitbewegtes Koordinatensystem. Dabei zeigt x immer in die Bewegungsrichtung des Transportfahrzeuges Tn, die im Wesentlichen durch die Transportstrecke 2 vorgegeben wird. An einem gekrümmten Streckenabschnitt ist die Bewegungsrichtung natürlich die Tangente an die Krümmung. Die Bewegungsrichtung x kann damit grundsätzlich je nach Ausführung der Transportstrecke 2 beliebig im Raum orientiert sein. y bezeichnet die Querrichtung quer zur Bewegungsrichtung x und in Richtung zum Luftspalt 10 zwischen dem Antriebsmagneten 4 am Transportfahrzeug Tn und den Antriebsspulen Sm an der Transportstrecke 2. z ist normal auf die die x und y Achse des Transportfahrzeuges Tn. In der Regel, aber nicht notwendigerweise, wird die Ebene des Luftspalts 10 parallel zur x-z-Ebene sein und die y-Richtung normal auf die Ebene des Luftspalts.

Die Orientierung der Achsen des Koordinatensystems ist aber natürlich nicht auf die Ausführung der Figuren beschränkt, sondern ist im Prinzip beliebig. Beispielsweise könnte ein Langstatorlinearmotor 1 realisiert sein, bei dem die Antriebsspulen Sm und Antriebsmagnete 4 nicht seitlich, sondern oben und/oder unten angeordnet sein. Damit würden beispielsweise die y und z Achsen den Platz tauschen.

An der Transportstrecke 2 ist auch zumindest eine Weiche W vorgesehen, die einen ersten Streckenabschnitt 2a und einen, davon abzweigenden zweiten Streckenabschnitt 2b der Transportstrecke 2 miteinander verbindet. Durch Stellen der Weiche W wird festgelegt, ob das Transportfahrzeug Tn entlang des ersten Streckenabschnittes 2a weiterbewegt oder, im Wesentlichen in Querrichtung y, auf den zweiten Streckenabschnitt 2b gelenkt und entlang des zweiten Streckenabschnittes 2b weiterbewegt wird. In der anderen Bewegungsrichtung werden zwei Streckenabschnitte natürlich auf einen Streckenabschnitt zusammengeführt. Eine Weiche W kann daher in der Regel in beide Bewegungsrichtungen durchfahren werden.

Die Transportstrecke 2 kann dabei, je nach Anwendung und Bedarf, beliebig geformt sein und kann geschlossene und/oder offene Streckenabschnitte umfassen. Die Transportstrecke 2 muss auch nicht in einer Ebene liegen, z.B. die x-y Ebene der Fig.1, sondern kann auch beliebig im Raum geführt sein.

Für die Erfindung entscheidend ist, dass in Querrichtung y an beiden Seiten des Transportfahrzeuges Tn (in Bewegungsrichtung x gesehen) ein Fahrzeug-Führungselement 7 angeordnet ist. Vorteilhafterweise ist das Transportfahrzeuge Tn hierzu um die x-z-Ebene symmetrisch aufgebaut, wie beispielsweise in Fig.2 dargestellt.

An der Transportstrecke 2 ist ein Strecken-Führungselement 6 vorgesehen, das mit einem Fahrzeug-Führungselement 7 am Transportfahrzeug Tn zusammenwirkt, um das Transportfahrzeug Tn entlang der Transportstrecke 2 in Bewegungsrichtung x zu führen. Das Strecken-Führungselement 6 kann an der Haltekonstruktion 3 angeordnet sein oder Teil der Haltekonstruktion 3 sein, kann aber auch anderweitig an der Transportstrecke 2 angeordnet sein. Zur Führung können verschiedene Elemente, wie Rollen, Räder, Gleitelemente, Führungsflächen, Gleitflächen, usw., vorgesehen sein. Die Antriebsspulen Sm werden vorzugsweise im Bereich des Strecken-Führungselement 6, beispielsweise ebenfalls an der Haltekonstruktion 3 angeordnet, um eine kompakte Ausführung zu erreichen.

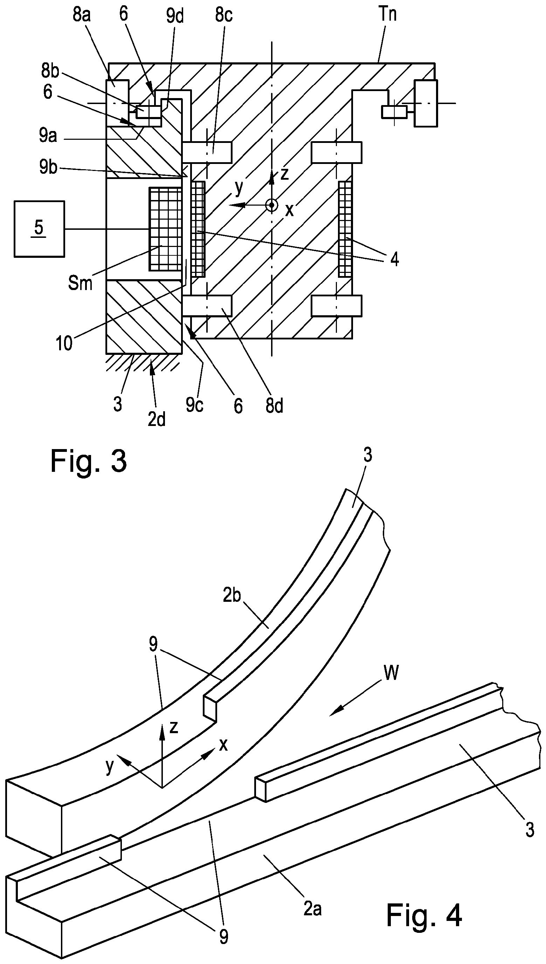

Die Transportstrecke 2 kann dabei einseitig oder zweiseitig (wieder in Querrichtung y gesehen) ausgeführt sein, wie anhand von Fig.2 und Fig.3 erläutert wird. Fig.2 und 3 zeigen jeweils einen Querschnitt quer zur Bewegungsrichtung x (in der y-z-Ebene), durch die Transportstrecke 2 und einem Transportfahrzeug Tn.

In einem zweiseitigen Streckenabschnitt 2c (Fig.2) ist an beiden Seiten ein Strecken-Führungselement 6 angeordnet, das jeweils mit dem Fahrzeug-Führungselement 7 an der jeweiligen Seite zusammenwirkt. In einem zweiseitigen Streckenabschnitt 2c wird das Transportfahrzeug Tn damit durch das Zusammenwirken der Führungen an beiden Seiten in Bewegungsrichtung x mechanisch zwangsgeführt, insbesondere wird eine Bewegung in Querrichtung y gesperrt.

In einem einseitigen Streckenabschnitt 2d (Fig.3) ist nur an einer Seite der Transportstrecke 2 ein Strecken-Führungselement 6 angeordnet, um das Transportfahrzeug Tn in Bewegungsrichtung x unabhängig von der Ausführung der gegenüberliegenden zweiten Seite mechanisch zwangszuführen. In einem solchen einseitigen Streckenabschnitt 2d ist das Strecken-Führungselement 6 und das dieser Seite zugeordnete Fahrzeug-Führungselement 7 am Transportfahrzeug Tn ausgeführt, um das Transportfahrzeug Tn in Bewegungsrichtung x mechanisch zwangszuführen. D.h., dass das Transportfahrzeug Tn nur durch das Zusammenwirken des Strecken-Führungselements 6 und des Fahrzeug-Führungselements 7 an einer Seite sicher entlang der Transportstrecke 2 geführt und an dieser gehalten wird.

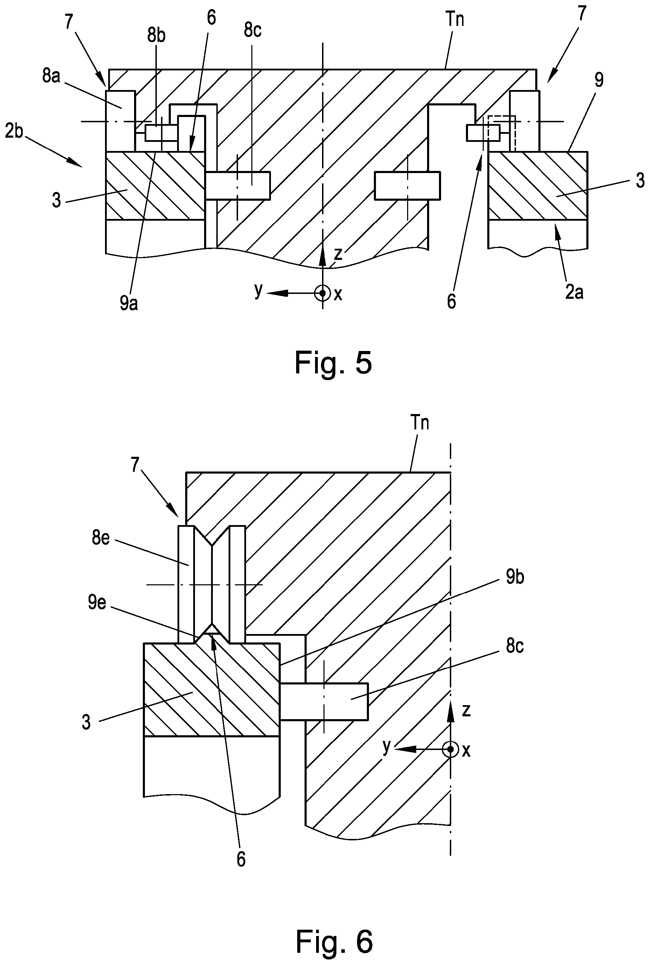

Das Strecken-Führungselement 6 ist im gezeigten Ausführungsbeispiel im einseitigen Streckenabschnitt 2d (Fig.3) durch vier Führungsflächen 9a, 9b, 9c, 9d an der Haltekonstruktion 3 ausgebildet, an denen Führungsrolle 8a, 8b, 8c, 8d abrollen. In Bewegungsrichtung x gesehen können natürlich mehrere Führungsrollen 8a, 8b, 8c, 8d hintereinander angeordnet sein. Die Führungsrollen 8a, 8b, 8c, 8d sind am Transportfahrzeug Tn drehbar gelagert angeordnet und bilden das Fahrzeug-Führungselement 7. Das Strecken-Führungselement 6 und das Fahrzeug-Führungselement 7 können natürlich auf verschiedenste Weise ausgeführt sein. Beispielsweise könnte anstelle von drei Führungsrollen 8a, 8b, 8c auch nur eine Führungsrolle 8e vorgesehen sein, die die Bewegung in z und y Richtung sperrt. Hierzu könnte in der Lauffläche einer solchen Führungsrolle 8e eine V-förmige Einkerbung vorgesehen sein, die auf einer V-förmigen Führungsfläche 9e abrollt, wie in Fig.6 dargestellt. Eine Führungsrolle 8a könnte aber auch so angeordnet sein, dass diese zwei Führungsflächen 9a, 9d abrollt. Für die Erfindung ist es entscheidend, dass das Strecken-Führungselement 6 und das Fahrzeug-Führungselement 7 an einem einseitigen Streckenabschnitt 2d zusammenwirken, sodass das Transportfahrzeug Tn in Bewegungsrichtung x mechanisch zwangsgeführt ist. Damit wird sichergestellt, dass das Transportfahrzeug Tn auch entlang eines einseitigen Streckenabschnittes 2d immer sicher an der Transportstrecke 2 gehalten und geführt ist und hierfür insbesondere keine Magnetkraft der Antriebsmagnete 4 erforderlich ist. Das bedeutet in der Regel aber auch, dass das Transportfahrzeug Tn nicht ohne weiteres von der Transportstrecke 2 entfernt oder auf diese aufgesetzt werden kann. Dazu kann es erforderlich sein, gewisse Teile der Führung zu entfernen.

In einem zweiseitigen Streckenabschnitt 2c, in dem das Transportfahrzeug Tn natürlich unverändert ist. kann ein Strecken-Führungselement 6 einer Seite natürlich gleich ausgeführt sein, wie in einem einseitigen Streckenabschnitt 2d. Nachdem die Beweglichkeit des Transportfahrzeuges Tn in einem zweiseitigen Streckenabschnitt 2c, insbesondere in Querrichtung y, aber von vornherein gesperrt ist, kann das Strecken-Führungselement 6 an einer Seite, oder auch an beiden Seiten, auch einfacher ausgeführt sein (z.B. wie in Fig.2 angedeutet). Dabei können gewissen Führungsflächen, z.B. die Führungsfläche 9d, in einem zweiseitigen Streckenabschnitt 2c entfallen, womit ein einer solchen Führungsflächen zugeordnetes Fahrzeug-Führungselement 7, beispielsweise die Führungsrolle 8b, in einem zweiseitigen Streckenabschnitt 2c auch funktionslos sein kann.

In Bewegungsrichtung x mechanisch zwangsgeführt bedeutet im Sinne der Erfindung, dass das Transportfahrzeug Tn durch die Führung, also durch das Zusammenwirken des Fahrzeug-Führungselements 7 und des Strecken-Führungselements 6, durch den Betrieb des Langstatorlinearmotors 1 nur in Bewegungsrichtung x bewegbar ist und die anderen Richtungen (y, z), und insbesondere auch Drehrichtungen (Verdrehung um x, y, z Richtung), gesperrt sind. In Fig.2 und 3 verhindert die wirkende Schwerkraft des Transportfahrzeuges Tn samt Beladung, dass sich das Transportfahrzeug Tn im Betrieb in z-Richtung (in Fig.2 und 3 nach oben) bewegt. Damit kann sich das Transportfahrzeug Tn durch den Betrieb des Langstatorlinearmotors 1 (also durch die Kräfte die durch die Antriebsspulen Sm hervorgerufen werden) nicht in diese z Richtung bewegen. Auch das wird noch unter einer mechanischen Zwangsführung in Bewegungsrichtung x verstanden. Es ist daher nicht erforderlich, die z Achse in beide Richtungen eigens zu sperren. Es kann aber natürlich vorgesehen sein, dass durch das Zusammenwirken des Strecken-Führungselements 6 und des Fahrzeug-Führungselements 7 auch die z Achse in beide Richtungen gesperrt wird, beispielsweise durch eine zusätzliche Führungsrolle, oder durch eine Führungsrolle 8c mit V-förmiger Einkerbung und zugehöriger V-förmigen Führungsfläche 9b.

Die Erfindung geht nun davon aus, dass es entlang der Transportstrecke 2 zumindest einen einseitigen Streckenabschnitt 2d gibt. Das bedeutet, dass das Fahrzeug-Führungselement 7 und das Strecken-Führungselement 6 so ausgeführt sein müssen, dass entlang dieses einseitigen Streckenabschnitts 2d eine mechanische Zwangsführung in Bewegungsrichtung x sichergestellt ist.

Im Bereich der Weiche W würde die mechanische Zwangsführung, egal ob in Bewegungsrichtung vor der Weiche W ein einseitiger Streckenabschnitt 2d oder ein zweiseitiger Streckenabschnitt 2c mit Zwangsführung in Bewegungsrichtung x vorgesehen ist, aber verhindern, dass das Transportfahrzeug Tn beispielsweise vom ersten Streckenabschnitt 2a in Querrichtung y auf den zweiten Streckenabschnitt 2b wechseln kann, weil die Bewegung in Querrichtung y durch die Zwangsführung gesperrt wäre. Daher ist erfindungsgemäß vorgesehen, dass im Weichenbereich die durch das Strecken-Führungselement 6 und das Fahrzeug-Führungselement 7 hergestellte mechanische Zwangsführung des Transportfahrzeugs Tn in Querrichtung y aufgehoben wird, um im Weichenbereich eine Bewegung des Transportfahrzeuges Tn in Querrichtung y zu ermöglichen. Damit kann das Transportfahrzeug Tn in Querrichtung y nun entweder auf den ersten Streckenabschnitt 2a oder den zweiten Streckenabschnitt 2b gelenkt werden.

Damit wäre das Transportfahrzeug Tn aber nicht mehr sicher in Bewegungsrichtung x geführt. Die Weiche W bedingt aber, dass im Bereich der Weiche W die Transportstrecke 2 zweiseitig ausgeführt sein muss. Damit ist im Bereich der Weiche W, in dem die beiden Streckenabschnitte 2a, 2b divergieren, auch immer an beiden Seiten ein Strecken-Führungselement 6 vorgesehen. Nachdem das Fahrzeug-Führungselement 7 ebenfalls an beiden Seiten des Transportfahrzeuges Tn vorgesehen ist, wird das Transportfahrzeug Tn im Bereich der Weiche W trotzdem sicher geführt und an der Transportstrecke 2 gehalten. Ein Herunterfallen des Transportfahrzeuges Tn im Bereich der Weiche W ist damit ausgeschlossen. Spätestens ab dem Punkt an dem die beiden Streckenabschnitte 2a, 2b soweit divergiert sind, dass das Fahrzeug-Führungselement 7 einer Seite mit dem zugeordneten Strecken-Führungselement 6 nicht mehr zusammenwirken kann, muss die mechanische Zwangsführung des Transportfahrzeuges Tn in Bewegungsrichtung wieder gewährleistet sein, um ein Herunterfallen des Transportfahrzeuges Tn von der Transportstrecke 2 sicher zu verhindern.

Das Aufheben der mechanischen Zwangsführung in Querrichtung y kann natürlich ebenfalls auf unterschiedliche Weise erfolgen. Beispielsweise kann der Teil des Strecken-Führungselements 6, der für das Sperren der Bewegung des Transportfahrzeuges Tn in Querrichtung y verantwortlich ist, entfernt werden. In einer möglichen Ausgestaltung kann eine Führungsfläche 9 des Strecken-Führungselements 6, beispielsweise die Führungsfläche 9d, die die Bewegung in Querrichtung y sperrt, im Bereich der Weiche W entfernt werden, wie in Fig.3 und Fig.4 dargestellt. Beispielsweise ist in Fig.3 und 4 die Nase an der Haltekonstruktion 3, die eine Führungsfläche 9d für eine Führungsrolle 8b zum Sperren der Querrichtung y ausbildet, im Bereich der Weiche W ausgespart. Damit kann sich das Transportfahrzeug Tn im Bereich der Weiche W auch in Querrichtung y bewegen, wie in Fig.5 angedeutet. Damit kann das Transportfahrzeug Tn im Bereich der Weiche W in Querrichtung y von einem Streckenabschnitt 2a, auf dem Transportfahrzeug Tn in die Weiche W einfährt, auf einen abzweigenden Streckenabschnitt 2b wechseln, auf dem das Transportfahrzeug Tn die Weiche W verlässt.

Es kann aber auch das Fahrzeug-Führungselement 7 am Transportfahrzeug Tn im Bereich der Weiche W, das für die Führung in Querrichtung y zuständig ist, verstellt werden, sodass die Führung in Querrichtung y aufgehoben wird. Beispielsweise könnte eine Führungsrolle 8b ausgeklinkt oder weggeschwenkt werden, sodass dieses nicht mehr an der zugehörigen Führungsfläche 9d des Strecken-Führungselements 6 abrollen kann. Das Verstellen des Fahrzeug-Führungselements 7 kann aktiv durch einen Antrieb am Transportfahrzeug Tn erfolgen, kann aber auch passiv durch die Bewegung des Transportfahrzeuges Tn erfolgen, beispielsweise durch eine entsprechende Rampensteuerung.

Selbstverständlich können im Bereich der Weiche W auch beide, also das Strecken-Führungselement 6 und das Fahrzeug-Führungselement 7, zur Aufhebung der Führung in Querrichtung verändert werden.

Nach dem Bereich der Weiche W wird die mechanische Zwangsführung in Bewegungsrichtung x wieder hergestellt, beispielsweise indem die Aussparung der Nase zurückgenommen wird oder die Führungsrolle 8b wieder eingeschwenkt oder eingeklinkt wird, und das Transportfahrzeug Tn bewegt sich nach der Weiche W auf dem gewünschten Streckenabschnitt 2a, 2b wieder einseitig oder zweiseitig, je nachdem ob der Streckenabschnitt nach der Weiche W ein einseitiger Streckenabschnitt 2d oder ein zweiseitiger Streckenabschnitt 2c ist, in Bewegungsrichtung x mechanisch zwangsgeführt weiter.

Wie der weiter zu befahrende Streckenabschnitt 2a, 2b in der Weiche W festgelegt wird, ist an sich beliebig. Beispielsweise könnte das Stellen der Weiche wie in der EP 3 109 998 A1 beschrieben erfolgen. Es könnte aber auch eine mechanische Weichenstellung vorgesehen sein.

Außerhalb des Bereichs einer Weiche W ist eine einseitige mechanische Zwangsführung vorteilhaft, weil der konstruktive Aufwand geringer ist, als bei einem zweiseitigen Streckenabschnitt 2c. Es kann aber auch Streckenbereiche geben, an denen eine höhere Vortriebskraft notwendig oder erwünscht ist, beispielsweise eine Steigung oder ein Bereich mit hoher Beladung des Transportfahrzeuges Tn. Dazu kann in einem solchen Bereich ein zweiseitiger Streckenabschnitt 2c vorgesehen sein, wobei an beiden Seiten auch Antriebsspulen Sm vorgesehen sein können, um die erreichbare Vortriebskraft auf das Transportfahrzeug Tn zu erhöhen.

## Patentansprüche

1. Langstatorlinearmotor mit einer Transportstrecke (2) entlang der zumindest ein Transportfahrzeug (Tn) in Bewegungsrichtung (x) bewegbar angeordnet ist, wobei am Transportfahrzeug (Tn) in einer Querrichtung (y) quer zur Bewegungsrichtung (x) zu beiden Seiten jeweils ein Fahrzeug-Führungselement (7) vorgesehen ist und zumindest ein Fahrzeug-Führungselement (7) mit einem Strecken-Führungselement (6) an der Transportstrecke (2) zusammenwirkt, um das Transportfahrzeug (Tn) entlang der Transportstrecke (2) zu führen, und an der Transportstrecke (2) zumindest eine Weiche (W) vorgesehen ist, die einen ersten Streckenabschnitt (2a) der Transportstrecke (2) mit einem zweiten Streckenabschnitt (2b) der Transportstrecke (2) verbindet und das Transportfahrzeug (Tn) im Bereich der Weiche (W) in Querrichtung (y) vom ersten Streckenabschnitt (2a) auf den zweiten Streckenabschnitt (2b), oder umgekehrt, wechselbar ist, **dadurch gekennzeichnet, dass** das Transportfahrzeug (Tn) außerhalb der Weiche (W) zumindest abschnittsweise in Bewegungsrichtung (x) zwangsgeführt ist und dabei an der Transportstrecke (2) zumindest ein einseitiger Streckenabschnitt (2d) vorgesehen ist, entlang dem ein Fahrzeug-Führungselement (7) nur an einer Seite der Transportstrecke (2) mit dem Strecken-Führungselement (6) an der zugeordneten Seite der Transportstrecke (2) zur Zwangsführung in Bewegungsrichtung (x) zusammenwirkt, **und dass** die Zwangsführung in Bewegungsrichtung (x) im Bereich der Weiche (W) in Querrichtung (y) aufgehoben ist.

2. Langstatorlinearmotor nach Anspruch 1, **dadurch gekennzeichnet, dass** der erste Streckenabschnitt (2a) in Bewegungsrichtung (x) des Transportfahrzeuges (Tn) vor und/oder nach der Weiche (W) als einseitiger Streckenabschnitt (2d) ausgeführt ist.

3. Langstatorlinearmotor nach Anspruch 1 oder 2, **dadurch gekennzeichnet, dass** der zweite Streckenabschnitt (2b) als einseitiger Streckenabschnitt (2d) ausgeführt ist.

4. Langstatorlinearmotor nach einem der Ansprüche 1 bis 3, **dadurch gekennzeichnet, dass** im Bereich der Weiche (W) das Strecken-Führungselement (6) zur Führung des Transportfahrzeugs (Tn) in Querrichtung (y) entfernt ist.

5. Langstatorlinearmotor nach einem der Ansprüche 1 bis 3, **dadurch gekennzeichnet, dass** im Bereich der Weiche (W) das Fahrzeug-Führungselement (7) zur Führung des Transportfahrzeugs (Tn) in Querrichtung (y) verstellbar ist, um das Zusammenwirken des Fahrzeug-Führungselements (7) zur Führung des Transportfahrzeugs (Tn) in Querrichtung (y) mit dem zugeordneten Strecken-Führungselement (6) aufzuheben.

## Geänderte Patentansprüche

### Geänderte Patentansprüche gemäss Regel 137(2) EPÜ.

1. Langstatorlinearmotor mit einer Transportstrecke (2) entlang der zumindest ein Transportfahrzeug (Tn) in Bewegungsrichtung (x) bewegbar angeordnet ist, wobei am Transportfahrzeug (Tn) in einer Querrichtung (y) quer zur Bewegungsrichtung (x) zu beiden Seiten jeweils ein Fahrzeug-Führungselement (7) vorgesehen ist und zumindest ein Fahrzeug-Führungselement (7) mit einem Strecken-Führungselement (6) an der Transportstrecke (2) zusammenwirkt, um das Transportfahrzeug (Tn) entlang der Transportstrecke (2) zu führen, und an der Transportstrecke (2) zumindest eine Weiche (W) vorgesehen ist, die einen ersten Streckenabschnitt (2a) der Transportstrecke (2) mit einem zweiten Streckenabschnitt (2b) der Transportstrecke (2) verbindet und das Transportfahrzeug (Tn) im Bereich der Weiche (W) in Querrichtung (y) vom ersten Streckenabschnitt (2a) auf den zweiten Streckenabschnitt (2b), oder umgekehrt, wechselbar ist, **dadurch gekennzeichnet, dass** das Transportfahrzeug (Tn) außerhalb der Weiche (W) zumindest abschnittsweise in Bewegungsrichtung (x) mechanisch zwangsgeführt ist und dabei an der Transportstrecke (2) zumindest ein einseitiger Streckenabschnitt (2d) vorgesehen ist, entlang dem ein Fahrzeug-Führungselement (7) nur an einer Seite der Transportstrecke (2) mit dem Strecken-Führungselement (6) an der zugeordneten Seite der Transportstrecke (2) zur mechanischen Zwangsführung in Bewegungsrichtung (x) zusammenwirkt, **und dass** im Bereich der Weiche (W), in dem der erste Streckenabschnitt (2a) und der zweite Streckenabschnitt (2b) divergieren, an beiden Seiten ein Strecken-Führungselement (6) vorgesehen ist, das jeweils mit einem Fahrzeug-Führungselement (7) zusammenwirkt, wobei die mechanische Zwangsführung in Bewegungsrichtung (x) im Bereich der Weiche (W) in Querrichtung (y) aufgehoben ist.

2. Langstatorlinearmotor nach Anspruch 1, **dadurch gekennzeichnet, dass** der erste Streckenabschnitt (2a) in Bewegungsrichtung (x) des Transportfahrzeuges (Tn) vor und/oder nach der Weiche (W) als einseitiger Streckenabschnitt (2d) ausgeführt ist.

3. Langstatorlinearmotor nach Anspruch 1 oder 2, **dadurch gekennzeichnet, dass** der zweite Streckenabschnitt (2b) als einseitiger Streckenabschnitt (2d) ausgeführt ist.

4. Langstatorlinearmotor nach einem der Ansprüche 1 bis 3, **dadurch gekennzeichnet, dass** im Bereich der Weiche (W) das Strecken-Führungselement (6) zur Führung des Transportfahrzeugs (Tn) in Querrichtung (y) entfernt ist.

5. Langstatorlinearmotor nach einem der Ansprüche 1 bis 3, **dadurch gekennzeichnet, dass** im Bereich der Weiche (W) das Fahrzeug-Führungselement (7) zur Führung des Transportfahrzeugs (Tn) in Querrichtung (y) verstellbar ist, um das Zusammenwirken des Fahrzeug-Führungselements (7) zur Führung des Transportfahrzeugs (Tn) in Querrichtung (y) mit dem zugeordneten Strecken-Führungselement (6) aufzuheben.
